# FASCICULE DE BREVET EUROPEEN

(11) **EP 3 926 929 B1**
(45) Date de publication et mention de la délivrance du brevet: **14.02.2024**
(21) Numéro de dépôt: 21179708.9
(22) Date de dépôt: 16.06.2021
(51) Int. Cl.: H04N 21/2343, H04N 21/4363, H04N 21/442, H04N 21/462, H04N 21/845

(54) **PROCÉDÉ DE GESTION DE LA LECTURE D'UN CONTENU NUMÉRIQUE AU SEIN D'UN TERMINAL LECTEUR DE CONTENUS MULTIMÉDIAS CONNECTÉ À UN DISPOSITIF DE RESTITUTION**
VERFAHREN ZUM VERWALTEN DES LESENS VON DIGITALEN INHALTEN IN EINEM MULTIMEDIA-LESEGERÄT, DAS MIT EINEM WIEDERGABEGERÄT VERBUNDEN IST
PROCESS FOR MANAGING THE PLAYBACK OF DIGITAL CONTENT WITHIN A MULTIMEDIA CONTENT PLAYER TERMINAL CONNECTED TO A RESTITUTION DEVICE

(30) Priorité: 18.06.2020 FR 2006352
(43) Date de publication de la demande: 22.12.2021
(73) Titulaire: Orange, 92130 Issy-les-Moulineaux (FR)
(72) Inventeur: MARCHAND, Hervé, 92326 Châtillon (FR); RIVOALEN, Mathieu, 92326 Châtillon (FR)

(56) Documents cités:
- EP-A1- 3 193 497
- EP-A1- 3 393 131
- WO-A1-2015/150684
- FR-A1- 3 081 647
- US-A1- 2006 222 015
- US-A1- 2006 225 106
- US-A1- 2011 317 071
- US-A1- 2015 341 411
- US-A1- 2018 234 637
- US-B1- 9 253 229

## Description

### Domaine technique

Le domaine de l'invention est celui des contenus multimédias numériques, à savoir les contenus audio et/ou vidéo numériques.

Plus précisément, l'invention se rapporte à un procédé de gestion de la lecture d'un contenu numérique au sein d'un terminal lecteur de contenus multimédias connecté à un dispositif de restitution.

Le dispositif de restitution est un dispositif capable de restituer des contenus multimédias. Ce dispositif de restitution dispose d'au moins deux sources de données.

Une source de données vise un dispositif capable de fournir un contenu pour être restituer sur le terminal de restitution. Le terminal lecteur de contenus est une source de données. D'autres sources de données sont par exemple une console de jeu, un disque dur, un ordinateur, etc.

Une source de données peut être connectée au dispositif de restitution via un port tel qu'un port connexion HDMI, un port USB, etc.

On verra dans un exemple de réalisation décrit ci-dessous que le terminal lecteur de contenus multimédias choisi pour illustrer l'invention est un décodeur de télévision numérique (set top box en angalis) ; Le décodeur visé ici est capable de requérir un accès à un contenu ayant plusieurs qualités disponibles. De tels contenus sont par exemple des contenus utilisés dans un contexte de téléchargement adaptatif progressif (HAS) dans lesquels les contenus sont découpés en segments, chaque segment étant disponible selon plusieurs débits d'encodage associés à des qualités de restitution respectives.

### Etat de la technique

Le document FR 3 081 647 A1 décrit un procédé de gestion de téléchargement progressif adaptatif (HAS) d'un contenu numérique au sein d'un terminal lecteur de flux multimédia en temps réel.

Le document US 9 253 229 B1 décrit un système adaptant la qualité d'un flux vidéo à l'utilisation qui en est faite par le client recevant ce flux.

L'accès à un contenu multimédia, tel que la télévision ou la vidéo à la demande, depuis un réseau de type Internet, est possible aujourd'hui, pour la plupart des terminaux de lecture de contenus multimédias.

Le terminal de lecture, par exemple un décodeur, émet généralement une requête à destination d'un serveur en indiquant un contenu multimédia choisi. Le décodeur reçoit en retour le contenu multimédia demandé. Dans le cadre d'un réseau de communication local, une telle requête transite par une passerelle d'accès au réseau, par exemple une passerelle résidentielle/domestique.

Le terminal de lecture est adapté pour recevoir ces contenus numériques sous forme de données multimédia et pour requérir une restitution sur un dispositif de restitution. Cette restitution consiste à fournir au niveau du terminal de lecture le contenu numérique au terminal de restitution sous une forme accessible à l'utilisateur. Par exemple, des données reçues correspondant à une vidéo sont généralement décodées par le dispositif de lecture de contenus, puis restituées au niveau du terminal de restitution sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal.

La diffusion de contenus numériques sur Internet est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et décodées par le terminal de lecture au fur et à mesure de leur arrivée. Le terminal de lecture reçoit et stocke une partie des données numériques dans une mémoire tampon avant de commander la restitution au terminal de restitution. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités d'images correspondant par exemple à différents débits d'encodage. Ces différentes qualités sont décrites dans un fichier de paramètres disponible en téléchargement sur un serveur de données, par exemple un serveur de contenus. Quand le terminal de lecture de contenus souhaite accéder à un contenu, ce fichier de description permet de sélectionner une qualité d'image pour le contenu à consommer en fonction de la bande passante disponible ou des capacités de stockage et de décodage du terminal client. Ce type de technique permet notamment de tenir compte des variations de bande passante sur la liaison entre le terminal de lecture et le serveur de contenus.

Il existe plusieurs solutions techniques pour faciliter la distribution d'un tel contenu en streaming, comme par exemple les solutions propriétaires Microsoft^{®} Smooth Streaming, Apple^{®} HLS, Adobe^{®} HTTP Dynamic Streaming ou encore la norme MPEG-DASH de l'organisme ISO/IEC qui sera décrite ci-après. Ces méthodes proposent d'adresser au terminal de lecture un ou plusieurs fichiers de description intermédiaires, appelés aussi documents ou manifestes, contenant les adresses des différents segments aux différentes qualités du contenu multimédia.

Ainsi, la norme MPEG-DASH (pour l'anglais "Dynamic Adaptive Streaming over HTTP", en français « diffusion en contenus adaptatif dynamique sur HTTP ») est un standard de format de diffusion audiovisuelle sur Internet. Ce standard se base sur la préparation du contenu en différentes présentations de qualité et débits d'encodage variables, découpées en segments de courte durée (de l'ordre de quelques secondes), également appelés « chunks ». Chacun de ces segments est rendu disponible au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un manifeste au format XML.

Le principe sous-jacent à cette norme est que le client MPEG-DASH effectue une estimation de la bande passante disponible pour la réception des segments, et, en fonction du remplissage de son tampon de réception, choisit, pour le prochain segment à charger, une représentation dont le débit d'encodage assure la meilleure qualité d'image possible, et permet un délai de réception compatible avec la restitution ininterrompue du contenu sur un dispositif de restitution.

Ainsi, pour s'adapter à la variation des conditions réseau, notamment en termes de bande passante, les solutions existantes de téléchargement adaptatif permettent au terminal de lecture de passer d'une version du contenu encodée à un certain débit, à une autre encodée à un autre débit, au cours du téléchargement. En effet, chaque version du contenu est divisée en segments de même durée. Pour permettre une restitution en continu du contenu sur le terminal, chaque segment doit atteindre le terminal de lecture avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal de lecture doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

En outre, d'autres dispositifs tels que des appareils lecteurs de contenus multimédias en temps réel accèdent également aux contenus numériques en mode de téléchargement adaptatif progressif pour des contenus télévisuels en temps réel (ou Live). C'est le cas par exemple de l'appareil Chromecast^{®} développé par Google^{®}, ou de la CléTV^{®} d'Orange^{®}.

De tels appareils se branchent classiquement sur le port HDMI d'un téléviseur et constitue une source de données pour le téléviseur. Ces appareils communiquent, par connexion Wi-Fi^{®}, avec un autre appareil du réseau de communication domestique connecté à un réseau de communication étendu de type Internet (passerelle résidentielle, ordinateur, téléphone intelligent de type smartphone, tablette...), afin de restituer, sur le dispositif de restitution, en l'espèce un téléviseur, le contenu multimédia reçu par une application logicielle compatible. On désignera par la suite ces appareils sous la désignation générique de Clef HDMI.

De tels appareils peuvent également être utilisés pour accéder à des contenus de type vidéo à la demande, ou pour restituer sur le téléviseur des contenus personnels stockés dans le réseau domestique, tels qu'une vidéo des dernières vacances ou du dernier événement familial.

Le plus souvent, l'alimentation électrique de la clé HDMI s'effectue via une connexion USB entre le téléviseur ou la clé HDMI, le téléviseur étant branché sur le secteur électrique. Dans ce dernier cas, le fonctionnement de tels appareils est donc ininterrompu, dans la mesure où ils ne sont généralement pas équipés d'interrupteurs marche/arrêt. Cela est d'autant plus vrai lorsqu'ils sont branchés à une source d'alimentation externe. En effet, l'utilisateur va naturellement éteindre ou mettre en veille sa télévision mais ne vas pas débrancher du secteur sa Clef HDMI de manière à, lorsque la télévision est de nouveau mise sous tension, à accéder au contenu sans délai lié au redémarrage de la clé HDMI.

Or, les contenus numériques dits « live », i.e. qui correspondent à des programmes télévisuels en temps réel, n'ont, par nature, pas de durée prédéfinie, ou de date de fin. Il en résulte que, si l'utilisateur final ne stoppe pas explicitement la diffusion de ces contenus, par exemple en arrêtant explicitement la diffusion du contenu sur la Clef HDMI (par exemple en revenant sur la page d'accueil) ou en interrompant son alimentation électrique, ils peuvent être joués indéfiniment par la clef même si le téléviseur est éteint et n'affiche donc aucun contenu sur son écran, ou même lorsque le port HDMI sur lequel est connecté la clé HDMI n'est pas sélectionné sur le téléviseur. Il en résulte donc une consommation permanente et inutile des ressources en bande passante du réseau de communication étendu du fournisseur d'accès à Internet et éventuellement au sein du réseau de communication local si la clé communique avec le réseau de communication étendu via un réseau local.

Ce problème se produit également lorsque l'utilisateur change de source HDMI pour utiliser un autre appareil que la clé HDMI, par exemple une console de jeu. Dans ce cas, si un utilisateur utilise un terminal de lecture sur un téléviseur et change de source HDMI pour en utiliser une autre source de donnée, le terminal de lecture, s'il n'a pas été mis en veille, va continuer à lire le contenu et va donc consommer de l'énergie et de la bande passante.

L'invention vient améliorer la situation.

A cet effet, selon un aspect fonctionnel, l'invention a trait à un procédé de gestion du téléchargement d'un contenu numérique au sein d'un terminal lecteur de contenus multimédias tel que défini dans la revendication 1.

Selon l'invention, lorsqu'un premier contenu, provenant du terminal lecteur de flux multimédia utilisé comme source de contenus par le terminal de restitution, est restitué sur le terminal de restitution, et que pendant cette restitution une autre source que la source courante est sélectionnée et qu'un autre contenu, dit deuxième contenu est lu et restitué, une entité de gestion, au lieu de laisser le terminal de lecture de contenus multimédias poursuivre la lecture du premier contenu en sélectionnant un débit d'encodage à la base de la bande passante disponible sur la liaison entre le terminal client et le serveur de contenus, va commander au terminal de lecture l'utilisation d'un débit indépendamment de la bande passante disponible pour la lecture du premier contenu.

Grâce à l'invention, bien que non sélectionné comme source de données, le terminal lecteur de flux poursuit la lecture du premier contenu avec une qualité donnée, de préférence de faible qualité comme expliqué ci-dessous ; de plus, du fait de la poursuite de la lecture, le terminal lecteur de flux est prêt à restituer le contenu en cas de sélection ultérieure du terminal lecteur comme source de données.

L'effet technique qu'offre l'invention est au moins double. Premièrement, en sélectionnant un faible débit d'encodage l'invention offre une économie en bande passante du fait de l'utilisation d'une qualité faible d'image. Deuxièmement, l'invention offre un délai d'attente largement diminué par rapport à l'art antérieur du fait que le terminal lecteur est en cours de lecture du premier contenu et est donc prêt à restituer le premier contenu. L'expérience utilisateur ne peut être que satisfaisante.

La modification est effectuée après une durée d'attente. Cela permet de prendre en compte un droit de repentir de l'utilisateur qui peut décider de ne finalement pas utiliser la nouvelle source sélectionnée, par exemple après quelques secondes de restitution. Ceci permet de poursuivre le téléchargement en mode adaptative streaming (HAS), c'est-à-dire à la base de la bande passante disponible entre le terminal de lecture et un serveur de contenus, et ainsi de restituer, lorsque l'utilisateur décide de sélectionner de nouveau, pendant cette durée d'attente, le terminal de lecture comme source de données, le contenu demandé avec une qualité optimale.

Selon un premier mode de mise en oeuvre particulier de l'invention, le premier contenu ayant plusieurs débits d'encodage disponibles associés à des qualités de restitution respectives, l'étape de modification comprend une demande modification de la qualité courante et de maintien de la qualité modifiée. Comme expliqué ci-dessus, grâce à ce premier mode, bien que non sélectionné comme source de données, le terminal lecteur de flux poursuit la lecture, sans requérir de restitution, par exemple avec une qualité de faible qualité moins consommatrice en bande passante. Selon une variante, la qualité modifiée est maintenue pendant une durée donnée.

Selon encore un deuxième mode de mise en oeuvre particulier de l'invention, qui pourra être mis en oeuvre alternativement ou cumulativement avec les précédents, la modification consiste à imposer une valeur de débit sur la durée donnée. Ce mode est simple à mettre en oeuvre et est très efficace pour réduire la bande passante consommée par le terminal de lecture lorsqu'il n'est pas sélectionné comme source de données.

Dans le contexte du streaming adaptatif, plusieurs débits d'encodage sont proposés du plus faible au plus fort. Selon encore un troisième mode de mise en oeuvre particulier de l'invention, qui pourra être mis en oeuvre alternativement ou cumulativement avec les précédents, la valeur de débit imposée est choisie parmi les débits les plus faibles. Un but étant de réduire la bande passante occupée par le terminal de lecture lors du téléchargement du contenu depuis un serveur du réseau vers le terminal lecteur de flux multimédia, la sélection d'un faible débit répond à ce besoin.

Selon encore un quatrième mode de mise en oeuvre particulier de l'invention, qui pourra être mis en oeuvre alternativement ou cumulativement avec les précédents, la modification consiste à diminuer la valeur de débit par paliers sur une durée donnée. Tout comme le deuxième mode, la valeur de débit est abaissée sur la sélection d'une autre source que le terminal de lecture. Une baisse par paliers répond donc aussi au besoin de réduction d'occupation de bande passante. En outre, Ce troisième mode privilégie une restitution de qualité en cas de nouvelle sélection du terminal lecteur de flux multimédia par exemple quelques secondes près sélection d'une autre source que le terminal de lecture. Ce mode est utile par exemple lorsque la sélection d'une autre source de données est faite par erreur ; suite à l'erreur, par exemple deux ou trois secondes après sélection d'une autre source, l'utilisateur sélectionne de nouveau la source de données liée au terminal lecteur qui, va grâce à ce troisième mode, restituer le contenu avec une qualité meilleure que si la qualité choisie avait été la plus faible comme dans le deuxième mode.

Selon encore un cinquième mode de mise en oeuvre particulier de l'invention, qui pourra être mis en oeuvre alternativement ou cumulativement avec les précédents modes, qu'après un changement de source, une durée d'inactivité de l'utilisateur vis-à-vis du terminal lecteur est calculée et en ce que si la durée d'inactivité est atteinte, l'état électrique (VL) du terminal de lecture est modifié. Ce cinquième mode permet au-delà d'une période d'inactivité de mettre le terminal lecteur de contenus en veille ; il en résulte un gain en bande passante et une réduction de la consommation électrique.

Selon encore un sixième mode de mise en oeuvre particulier de l'invention, qui pourra être mis en oeuvre alternativement ou cumulativement avec les précédents modes, la modification du fonctionnement comprend un arrêt de la lecture du contenu. Ce sixième mode permet de réduire au maximum la bande passante occupée par la lecture du premier contenu.

Selon un aspect matériel, l'invention se rapporte à une entité de gestion (MNG) tel que défini dans la revendication 8.

Selon un autre aspect matériel, l'invention se rapporte à un terminal lecteur de contenus multimédias comprenant une entité telle que définie ci-dessus.

Selon un autre aspect matériel, l'invention se rapporte à un programme d'ordinateur apte à être mis en oeuvre sur un terminal lecteur de contenus multimédias, le programme comprenant des instructions de code qui, lorsqu'il est exécuté par un processeur, réalise les étapes du procédé définies dans le procédé défini ci-dessus.

Selon un autre aspect matériel, l'invention se rapporte à un support de données sur lequel a été mémorisée au moins une série d'instructions de code de programme pour l'exécution d'un procédé tel que défini ci-dessus.

Le support de données peut être n'importe quelle entité ou dispositif capable de stocker le programme. Par exemple, le support peut comporter un moyen de stockage, tel qu'une mémoire RAM, une mémoire ROM, par exemple un CD ROM ou une ROM de circuit microélectronique, ou encore un moyen d'enregistrement magnétique tel qu'un un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Enfin, signalons ici que, dans le présent texte, le terme « module » ou « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

L'invention sera mieux comprise à la lecture de la description qui suit, donnée à titre d'exemple et faite en référence aux dessins annexés sur lesquels :
[Fig. 1] La figure 1 représente une architecture de téléchargement progressif sur Internet basée sur l'utilisation du streaming adaptatif selon l'invention ;
[Fig. 2] La figure 2 illustre de façon schématique la structure matérielle d'un terminal lecteur de flux multimédia en temps réel intégrant une entité de gestion selon un mode de réalisation de l'invention;
[Fig. 3] La figure 3 présente les principaux éléments du terminal lecteur ainsi qu'une vue schématique des différents segments d'un contenu principal ;
[Fig. 4] La figure 4 présente l'évolution, selon un mode de réalisation de l'invention, du débit d'encodage utilisé pour le contenu principal selon que le terminal de lecture de flux multimédia est sélectionné comme source de données dans le téléviseur ou pas.
[Fig. 5] La figure 5 présente l'évolution, selon un autre mode de réalisation de l'invention, du débit d'encodage utilisé pour le contenu principal selon que le terminal de lecture de flux multimédia est sélectionné comme source de données dans le téléviseur ou pas.
[Fig. 6] La figure 6 présente une variante possible des modes décrits en référence aux figures 4 et 5.

Description détaillée de modes de réalisation de l'invention.

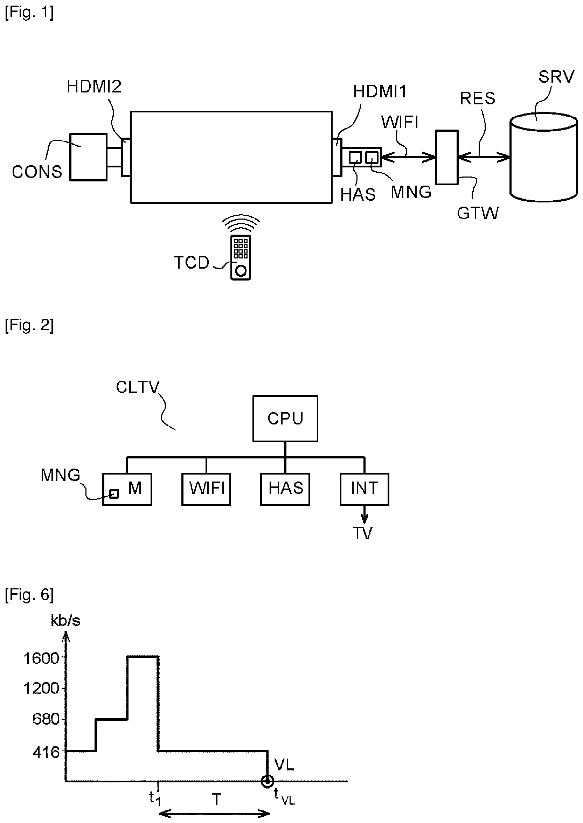

On présente désormais, en relation avec la figure 1, une architecture de téléchargement progressif basée sur l'utilisation du streaming adaptatif HAS selon un mode de réalisation de l'invention. Précisons à nouveau ici que l'invention ne se limite pas à la technologie HAS mais s'étend à toutes autres technologies de téléchargement de données.

### Le système informatique SYS comprend

Un terminal lecteur de flux multimédia CLTV, par exemple une clé HDMI connectée à un terminal de restitution TV tel qu'un téléviseur.

Une console de jeux CONS.

Dans notre exemple, le terminal CLTV et la console sont connectées sur deux ports distincts du téléviseur TV et sont donc deux sources de données pour le téléviseur TV.

Une source de données peut être sélectionnée via un dispositif de commande tel qu'une télécommande ou au moyen d'un téléphone intelligent sur lequel est installée une application logicielle de télécommande du terminal CLTV.

Dans notre exemple, le terminal CLTV et la console CONS sont situés dans un réseau local LAN piloté par une passerelle domestique GTW. Le contexte du réseau local est donné à titre d'exemple et pourrait être transposé aisément à un réseau Internet de type « best effort », un réseau d'entreprise, etc.

La passerelle GTW est apte à communiquer via un réseau de télécommunication RES tel qu'un réseau étendu WAN connu de l'homme du métier.

Un serveur de contenus numériques SRV se trouve selon cet exemple dans le réseau étendu WAN mais il pourrait indifféremment être situé dans le réseau local LAN, par exemple dans la passerelle domestique GTW ou tout autre équipement capable d'héberger un tel serveur de contenus.

Le serveur de contenus SRV reçoit par exemple des chaînes de contenus de télévision numérique en provenance d'un réseau de télévision diffusée, non représenté, et/ou des vidéos à la demande, et les met à disposition des terminaux clients.

Dans notre exemple, le terminal de lecture CLTV est un terminal client et peut à ce titre entrer en communication avec le serveur de contenus SRV pour recevoir un ou plusieurs contenus (films, documentaires, séquences publicitaires, etc.).

Il est fréquent, dans ce contexte client-serveur, de recourir, pour échanger les données entre le terminal client CLTV et le serveur SRV, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client CLTV et la passerelle de services GTW, et/ou entre cette dernière et le serveur de contenus SRV.

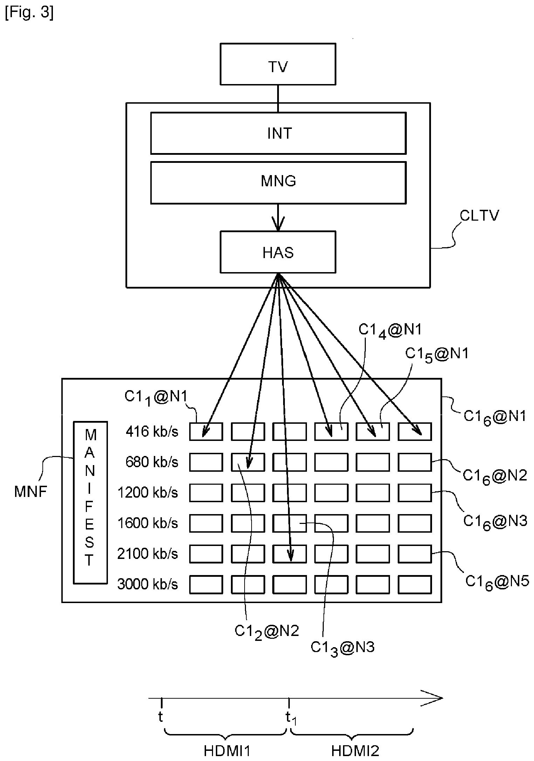

Classiquement, comme on le verra en référence à la figure 3, différentes qualités peuvent être encodées pour le même contenu d'une chaîne, correspondant par exemple à différents débits d'encodage. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels (ou « segments » de contenu, en anglais « chunks », ces trois mots étant utilisés indifféremment dans l'ensemble de ce document).

La description de ces différentes qualités et de la segmentation temporelle associée, ainsi que les segments de contenu, est accessible par le terminal client et mis à sa disposition via leurs adresses Internet (URI : Universal Ressource Identifier). L'ensemble de ces paramètres (qualités, adresses des segments, etc.) est en général regroupé dans un fichier de paramètres, dit fichier de description ou « manifest MNF ». On notera que ce fichier de paramètres peut être un fichier informatique ou un ensemble d'informations descriptives du contenu, accessible à une certaine adresse.

Dans un contexte de téléchargement adaptatif progressif, le terminal CLTV peut adapter ses requêtes pour recevoir et décoder le contenu demandé par l'utilisateur à la qualité qui lui correspond au mieux. Dans notre exemple, les contenus sont disponibles, du plus faible au plus fort, aux débits 416 kb/s (kilobits par seconde) (Résolution 1, ou niveau 1, noté (N1), 680 kb/s (N2), 1200 kb/s (N3) ; dans cette configuration, si le terminal client CLTV dispose d'une bande passante de 3000 kb/s, il peut demander le contenu à n'importe quel débit inférieur à cette limite, par exemple 1200 kb/s. De manière générale, on note « Ci@Nj » le contenu numéro i avec la qualité j (par exemple le j-ième niveau Nj de qualité décrit dans le fichier de description).

Le nombre de débits d'encodage disponibles par segment varie selon le terminal de lecture utilité. Sur la figure 3, le contenu C1 comprend six débits d'encodage par segment à savoir, du plus faible au plus fort, 416 kb/s, 680 kb/s, 1200 kb/s, 1600 kb/s, 2100 kb/s et 3000 kb/s.

La passerelle de service GTW est dans cet exemple une passerelle domestique qui assure le routage des données entre le réseau étendu WAN et le réseau local LAN, gère les contenus numériques en assurant notamment leur réception en provenance du réseau et la transmission au terminal lecteur CLTV.

Dans cet exemple, pour visualiser un contenu, le terminal CLTV interroge tout d'abord la passerelle de service GTW pour obtenir une adresse du fichier de description MNF du contenu (par exemple, C1) souhaité. La passerelle de service GTW répond en fournissant au terminal CLTV l'adresse du fichier de description MNF. Dans la suite, on supposera que ce fichier est un fichier de type manifest selon la norme MPEG-DASH (noté « C.mpd ») et on se référera indifféremment, selon le contexte, à l'expression « fichier de description » ou « manifest».

Alternativement, ce fichier peut être récupéré directement auprès d'un serveur Internet local ou externe au réseau local, ou se trouver déjà sur la passerelle de service ou sur le terminal au moment de la requête.

Un exemple de fichier manifest (MPD) conforme à la norme MPEG-DASH et comportant la description de contenus disponibles dans trois qualités différentes (512 kb/s,1024 kb/s,2048 kb/s) des contenus segmentés est présenté en annexe 1. Ce fichier manifest simplifié décrit des contenus numériques dans une syntaxe XML (de l'Anglais « eXtended Markup Language»), comprenant une liste de contenus sous forme de segments classiquement décrits entre une balise ouvrante (<SegmentList>) et une balise fermante (</SegmentList>). La découpe en segments permet notamment de s'adapter finement aux fluctuations de la bande passante. Chaque segment correspond à une certaine durée (champ « duration ») avec plusieurs niveaux de qualité et permet de générer leurs adresses (URL - Uniform Resource Locator). Cette génération est faite dans cet exemple à l'aide des éléments « BaseURL » (« HTTP://server.com») qui indique l'adresse du serveur de contenus et « SegmentURL » qui liste les parties complémentaires des adresses des différents segments :
- « C1_512kb_1.mp4 » pour le premier segment du contenu « C1 » à 512 kilobits par seconde (« kb ») au format MPEG-4 (« mp4 »),
- « C1_512kb_2.mp4 » pour le second segment,
- etc.

Une fois qu'elle dispose des adresses de segments correspondant au contenu souhaité, la passerelle de service GTW procède à l'obtention des segments via un téléchargement à ces adresses. On notera que ce téléchargement s'opère ici, traditionnellement, au travers d'une URL HTTP, mais pourrait également s'opérer au travers d'une adresse universelle (URI) décrivant un autre protocole (dvb://monsegmentdecontenu par exemple).

La clef CLTV est utilisée pour restituer, sur l'écran du téléviseur TV, un programme télévisuel. Par la suite, on désigne ce programme télévisuel sous le nom de contenu C1. Un tel contenu C1 est décrit dans un fichier manifest MNF.

En variante, on notera que le contenu C1 peut être un programme télévisuel diffusé en différé, ou une vidéo à la demande, ou une vidéo personnelle de l'utilisateur, ou tout autre contenu multimédia de durée déterminée, pour laquelle l'invention s'applique également.

Les segments de contenu obtenus par la passerelle résidentielle GTW sont par exemple transmis en WiFi^{®} à la clef CLTV, qui pilote leur affichage sur l'écran du téléviseur TV, pour restitution à l'utilisateur.

La figure 2 représente une architecture d'un terminal de lecture, dans notre exemple une clé CLTV selon un mode de réalisation de l'invention.

La clé CLTV comprend, classiquement, des mémoires M associées à un processeur CPU. Les mémoires peuvent être de type ROM (de l'anglais « Read Only Memory ») ou RAM (de l'anglais « Random Access Memory ») ou encore Flash. La clef CLTV communique avec le réseau local LAN et le réseau Internet étendu WAN via le module WIFI pour une communication locale sans fils avec la passerelle résidentielle GTW ou un autre terminal de communication du réseau local LAN, par exemple le téléphone intelligent 3.

La clef CLTV comprend un module de téléchargement progressif adaptatif HAS apte à demander un téléchargement progressif de l'un des contenus à l'une des qualités proposées dans un fichier de description MNF. Ce fichier de description MNF peut être enregistré par exemple dans les mémoires M de la clef CLTV ou se trouver à l'extérieur.

La clé CLTV comprend en outre un mode de gestion MNG dont la fonction sera expliquée ci-après.

La clef CLTV peut aussi contenir d'autres modules comme un disque dur non représenté pour le stockage des segments vidéo, un module de contrôle d'accès aux contenus, un module de traitement des commandes reçues du smartphone.

La clé CLTV est connectée à un téléviseur TV, par l'intermédiaire d'une liaison HDMI1.

On présente désormais, en relation avec la figure 3, les éléments principaux d'une clé CLTV et une vue schématique d'un contenu principal C1 stocké dans le serveur de contenus SRV sous forme de segments. Plus précisément, le serveur de contenu HAS expose une vidéo C1 sous forme de segments ou « chunks » C1i@Nj encodés à différents débits d'encodage Nj, où l'indice i désigne un identifiant temporel du « chunk » C1i@Nj.

Selon l'art antérieur, le module de téléchargement HAS de la clé CLTV est chargé de venir récupérer des « chunks » auprès du serveur de contenu HAS en choisissant la qualité vidéo Nj en fonction de la ressource réseau disponible. On ne décrit pas ici plus en détail la façon dont le module de téléchargement HAS choisit le débit d'encodage du prochain segment vidéo à télécharger : il existe en effet de nombreux algorithmes permettant d'opérer ce choix, dont les stratégies sont plus ou moins sécuritaires ou agressives. On rappelle cependant que, le plus souvent, le principe général de tels algorithmes repose sur le téléchargement d'un premier segment au débit d'encodage le plus faible proposé dans le fichier manifest, et sur l'évaluation du temps de récupération de ce premier segment. Sur cette base, le module de téléchargement HAS évalue si, en fonction de la taille du segment et du temps mis pour le récupérer, les conditions réseau permettent de télécharger le segment suivant à un débit d'encodage plus élevé. Certains algorithmes reposent sur une augmentation progressive du niveau de qualité des segments de contenu téléchargés ; d'autres proposent des approches plus risquées, avec des sauts dans les niveaux des débits d'encodage des segments successifs.

Dans le cas classique, si un « chunk » vidéo dure 3 secondes, la récupération du « chunk » par le module de téléchargement HAS ne doit pas excéder 3 secondes, afin de permettre une restitution sans interruption du contenu par la clé CLTV. Il convient donc pour le module de téléchargement HAS d'opérer le meilleur compromis entre une qualité de restitution, et donc un débit d'encodage, aussi élevés que possible, et le temps de téléchargement du segment, qui doit être suffisamment faible pour permettre une restitution en continu sur le téléviseur TV.

Dans le mode de réalisation illustré en figure 3, le module de téléchargement HAS commande le téléchargement d'un segment au débit d'encodage optimal comme décrit plus en détail par la suite.

Dans un premier temps, le module HAS récupère le fichier manifest MNF qui correspond au contenu vidéo C1 afin de découvrir les segments disponibles du contenu vidéo C1, et les différentes qualités vidéo Nj associées. Dans l'exemple de la figure 3, le contenu C1 est par exemple proposé sous forme de segments de durée 3s, avec un premier débit d'encodage N1 = 416kb/s, un deuxième débit d'encodage N2 = 680 kb/s, un troisième débit d'encodage N3 = 1200 kb/s, etc.

Dans un mode de fonctionnement normal, non illustré sur la figure 3, le module HAS opère le téléchargement par exemple, des segments successifs C11@N1 (soit le premier segment temporel à un débit d'encodage de 416 kb/s), puis C12@N3 (soit le deuxième segment temporel à un débit d'encodage de 1600 kb/s), puis C13@N3 (soit le troisième segment temporel à un débit d'encodage de 1200 kb/s), etc.

Les différents segments téléchargés par le module de téléchargement HAS sont transmis à un module d'interface INT pour leur restitution à l'utilisateur sur l'écran du téléviseur TV. Le module INT gère de l'interface avec le téléviseur TV, par lequel elle obtient par exemple des informations sur les éventuelles interactions de l'utilisateur avec le téléviseur TV (action sur la télécommande du téléviseur par exemple par appui sur la touche volume ou une touche de changement de canal), et par lequel elle peut piloter l'affichage sur l'écran du téléviseur TV d'un contenu demandé, par exemple une chaîne de télévision ou une interface de navigation concomitamment.

L'algorithme mis en oeuvre par le module de téléchargement HAS pour déterminer quel segment à quel débit d'encodage doit être téléchargé en mode de fonctionnement normal peut être l'un des algorithmes déjà existants de l'art antérieur. Cet algorithme ne sera donc pas décrit ici plus en détail.

Comme indiqué précédemment, le terminal CLTV et la console sont connectés au téléviseur TV via des ports HDMI1/HDMI2 respectifs, représentatifs de source de données différentes.

Un module de sélection présent dans le téléviseur peut sélectionner un port individuellement et restituer un contenu provenant de la source de données connectée au port concerné.

Lorsque le terminal CLTV est en cours d'utilisation, et que le terminal est sélectionné comme source de données dans le téléviseur TV, un contenu multimédia issu du terminal lecteur CLTV peut être restitué sur l'écran du téléviseur.

Pendant cette restitution, un utilisateur peut souhaiter jouer avec la console CONS. Dans ce cas, l'utilisateur utilise sa télécommande et sélectionne une autre source de données que celle utilisée par le terminal CLTV à savoir, dans notre exemple, la source de données HDMI2.

Selon un mode de réalisation du procédé de l'invention, les étapes sont, alors que le terminal lecteur de flux est sélectionné comme source de données HDMI1, dite première source de données, les suivantes :
une étape de détection d'une sélection d'une source HDMI2, dite deuxième source, autre que la première source HDMI1, suivie d'
une étape de sélection d'un débit d'encodage indépendamment de la bande passante disponible, et de maintien dudit débit modifié pendant une durée donnée.

Dans notre exemple, ces étapes sont mises en oeuvre par le module de gestion MNG introduit ci-dessus. La localisation du module de gestion est quelconque ; dans notre exemple, ce module de gestion est situé dans le terminal de lecture CLTV.

En d'autres mots, le module de gestion MNG force le module de téléchargement HAS à utiliser un débit d'encodage particulier pendant une période de temps de donnée. Dans notre exemple, la modification consiste en une réduction du débit courant par exemple à 416 kb/s si ce dernier est supérieur à un débit d'encodage seuil par exemple 680 kb/s.

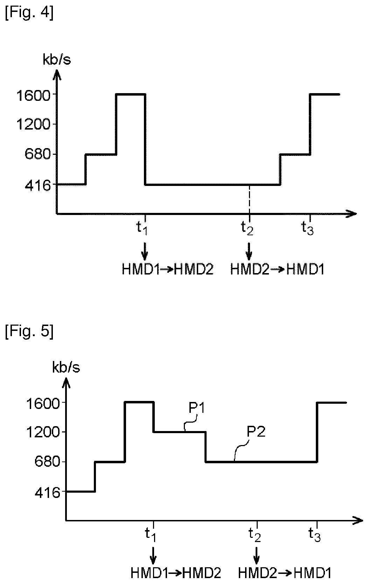

Les figures 4 et 5 illustrent sur un axe temporel l'évolution du débit d'encodage en trois temps, à savoir : dans un premier temps, lorsque la clé CLTV est utilisée comme source de données ; dans un deuxième lorsque la clé CLTV n'est plus utilisée comme source de données, une autre source de données ayant été sélectionné sur le téléviseur ; le module de téléchargement HAS de la clé CLTV poursuivant simultanément le téléchargement des segments ; et dans un troisième temps, lorsque la clé CLTV est de nouveau utilisée comme source de données.

Lorsque la source de données sélectionnée est la clé CLTV, le module HAS sélectionne le débit d'encodage selon la méthode HAS décrite ci-dessus en se basant sur la bande passante entre le terminal lecteur CLTV et le serveur SRV.

A l'inverse, lorsqu'une source de données autre que la source associée à la clé est sélectionnée, le module de téléchargement HAS de la clé CLTV poursuit le téléchargement des segments sous le contrôle du module de gestion MNG qui va forcer le module de téléchargement à sélectionner le débit d'encodage des segments, ce indépendamment de la bande passante.

Sur la figure 4, et en référence à la figure 3, on suppose aussi, qu'à un instant t, le terminal CLTV est utilisée comme source de données par le téléviseur TV qui reçoit successivement depuis le serveur SRV des segments du contenu C1 avec des qualités de 416 kb/s, 680 kb/s, 1600 kb/s.

A un instant t1, une autre source de données HDMI2 est sélectionnée avec la télécommande TCD.

A cet instant t1, la console CONS devient la source de données du téléviseur via le port HDMI2 ; et la clé CLTV continue de télécharger les segments.

Le module de gestion MNG détecte ce changement et requiert une modification de la sélection des segments. Dans notre exemple, la modification consiste à sélectionner un débit d'encodgae parmi les plus faibles pour les segments à venir. Dans notre exemple, le débit choisi est le plus faible débit proposé à savoir 416 kb/s. Sur la figure 3, les 3 segments à venir représentés sur la figure sont les segments C14@N1, C15@N1 C16@N1; tous ces segments sont sélectionnés avec le débit N1 égal à 416 kb/s.

En résumé, lorsque le terminal CLTV n'est plus une source de données pour le téléviseur TV, le module de gestion MNG requiert au module de téléchargement HAS de ne télécharger que des segments avec un débit à 416 kb/s. Le module de téléchargement HAS cesse alors de télécharger des segments en fonction des ressources disponibles comme cela est expliqué ci-dessus.

Supposons qu'à un instant t2, l'utilisateur sélectionne de nouveau le port HDMI1. La clé CLTV redevient la source de données du téléviseur TV.

Supposons qu'à un instant t2, alors que le débit courant est à 416 kb/s, l'utilisateur sélectionne de nouveau le port HDMI1. La clé CLTV redevient la source de données du téléviseur TV.

A cet instant t2, le module de gestion MNG requiert au module de téléchargement HAS de reprendre un fonctionnement normal. Le module de téléchargement HAS récupère de nouveau des segments auprès du serveur de contenu HAS de manière connue en choisissant la qualité vidéo Nj en fonction de la ressource réseau disponible.

A cet instant t2, le terminal CLTV poursuit la lecture avec un débit à 416 kb/s ; le contenu est ensuite restitué par le téléviseur TV avec ce débit.

Après réception du segment à 416 k/s, le module de téléchargement HAS reprend son fonctionnement normal de téléchargement HAS, et détermine le débit à utiliser sur la base des ressources réseau disponibles.

A un instant t3, le terminal lecteur CLTV télécharge le contenu avec un débit à 680 kb/s et plus tard à 1600 kb/s.

La figure 5 illustre une variante au cours de laquelle, à l'instant t1, le module de gestion MNG gère la sélection des débits, non pas en sélectionnant le plus faible débit d'encodage, mais en requérant au module HAS de diminuer le débit d'encodage par paliers de préférence de façon dégressive.

Tout comme sur la figure 4, on suppose aussi, qu'à un instant t, le clé CLTV est utilisée comme source de données par le téléviseur TV qui reçoit successivement depuis le serveur SRV des segments du contenu C1 avec des qualités de 416 kb/s, 680 kb/s, 1600 kb/s.

A un instant t1, une autre source de données HDMI2 est sélectionnée avec la télécommande TCD. A cet instant, la console CONS devient la source de données du téléviseur via le port HDMI2 ; et la clé CLTV continue de télécharger les segments. Les segments reçus par la clé ne sont pas restitués car la clé n'est pas sélectionnée comme source de données sur le téléviseur.

Le module de gestion MNG détecte ce changement et requiert une modification de la sélection des segments.

Dans notre exemple, la modification consiste pour le module de téléchargement HAS à diminuer progressivement le débit ; dans notre exemple, la diminution s'effectue par paliers.

Par exemple, après détection du changement de source à l'instant t1, le module de téléchargement HAS va récupérer des segments ayant un débit de 1200 kb/s dans un premier temps ; plus tard, le module de téléchargement has diminue le débit à 680 kb/s.

Supposons qu'à un instant t2, alors que le débit courant est à 680 kb/s, l'utilisateur sélectionne de nouveau le port HDMI1. La clé CLTV redevient la source de données du téléviseur TV.

A cet instant t2, le terminal CLTV poursuit la lecture avec un débit à 680 kb/s ; le contenu est ensuite restitué par le téléviseur TV avec ce débit.

Suite à la réception du segment à 680 kb/s, le module de téléchargement HAS estime le débit optimal sur la base d'un fonctionnement normal de téléchargement HAS, à savoir à la base des ressources réseau disponibles.

A un instant t3, le terminal lecteur CLTV télécharge le contenu avec un débit à 1600 kb/s.

Cette variante est intéressante dans le cas où une source de données, en l'espèce HDMI2, est sélectionnée par inadvertance. Suite à cette erreur, un utilisateur va probablement sélectionner de nouveau la source HDMI1 et va voir restituer un contenu d'une qualité meilleure (680 kb/s) que lorsque le débit est choisi le plus faible possible (416 kb/s). En effet, en comparant cette variante avec celle qui précède, dans la première variante, à l'instant t2, la clé CLTV récupère un flux avec un débit d'encodage à 416 kb/s, le plus faible ; la qualité de restitution est la moins bonne. A l'inverse, dans la deuxième variante, la clé CLTV récupère un flux ayant un débit d'encodage P2 de meilleure qualité que pour la première variante, à savoir 680 kb/s au lieu de 416 kb/s.

Selon une autre variante, pendant les phases au cours desquelles la clé CLTV est en cours de téléchargement de segment alors qu'une autre source de données que la clé CLTV est utilisée, une période d'inactivité T peut être définie à l'issue de laquelle la clé CLTV peut être mise en veille VL ou être mise hors tension. Dans notre exemple, en référence à la figure 6, la clé CLTV est mise en veille à un instant tvl.

A noter qu'une première période d'inactivité peut être définie lorsque la clé CLTV est sélectionnée comme source de données, et une deuxième période d'inactivité lorsque la clé HDMI, bien qu'en fonctionnement, n'est pas sélectionnée comme source de données. Par exemple, la première période peut être de trois heures et la deuxième période d'inactivité de 5 minutes.

La modification, qu'elle soit effectuée en imposant un débit donnée ou qu'elle soit effectuée par paliers, est effectuée après une durée d'attente Ainsi l'invention prend en compte un droit de repentir de l'utilisateur qui peut décider de ne finalement pas utiliser la nouvelle source sélectionnée, par exemple après quelques secondes de restitution. Ceci permet de poursuivre le téléchargement en mode adaptative streaming (HAS), c'est-à-dire à la base de la bande passante disponible entre le terminal de lecture et un serveur de contenus, et ainsi de restituer, lorsque l'utilisateur décide de sélectionner, de nouveau, pendant cette durée d'attente le terminal de lecture comme source de données, le contenu demandé avec une qualité optimale.

### Annexe 1

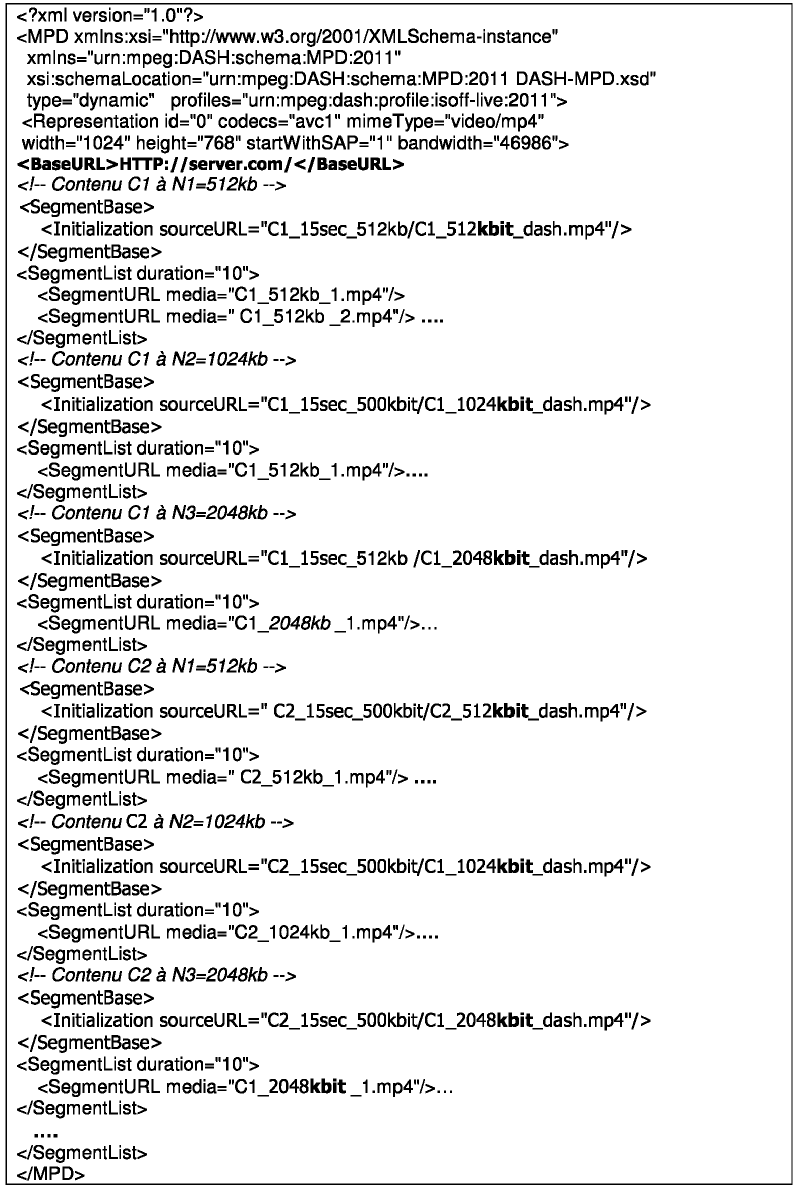

## Revendications

1. Procédé de gestion du téléchargement d'un contenu numérique (C1) au sein d'un terminal lecteur de contenus multimédias (CLTV), depuis un réseau de communication, , ledit terminal lecteur de contenus multimédias étant apte à être une source (HDMI1) de contenus d'un terminal de restitution (5), ledit terminal de restitution ayant plusieurs sources de contenu numérique (HDMI1,HDMI2) sélectionnables, un contenu ayant plusieurs débits d'encodage disponibles associés à des qualités de restitution respectives, la qualité choisie étant fonction d'une bande passante, **caractérisé en ce qu'**il comprend les étapes suivantes lorsque le terminal lecteur de contenus est sélectionné comme source de contenu numérique, dite première source,
une étape de détection, au cours d'une lecture d'un premier contenu par le terminal lecteur, d'une sélection d'une source, dite deuxième source, autre que la première source,
une étape de lecture et de restitution d'un deuxième contenu issu de la deuxième source à la place du premier contenu,
l'étape de détection déclenchant une durée d'attente au cours de laquelle la réception du premier contenu est poursuivie en maintenant une qualité optimale en fonction de la bande passante, la durée d'attente étant suivie d'une étape de modification du fonctionnement du terminal lecteur en liaison avec la lecture du premier contenu,.

2. Procédé de gestion selon la revendication 1, **caractérisé en ce que** l'étape de modification comprend une demande modification de la qualité courante et de maintien de la qualité modifiée pendant une durée donnée.

3. Procédé de gestion selon la revendication 1, **caractérisé en ce que** la modification consiste à imposer une valeur de débit sur la durée donnée.

4. Procédé de gestion selon la revendication 2, **caractérisé en ce que** la valeur de débit imposée est choisie parmi les débits les plus faibles.

5. Procédé de gestion selon la revendication 1, caractérisé en ce la modification consiste à diminuer la valeur de débit par paliers sur une durée donnée.

6. Procédé de gestion selon la revendication 1, **caractérisé en ce qu'**après un changement de source, une durée d'inactivité de l'utilisateur vis-à-vis du terminal lecteur est calculée et **en ce que** si la durée d'inactivité est atteinte, l'état électrique (VL) du terminal de lecture est modifié.

7. Procédé de gestion selon la revendication 1, **caractérisé en ce que** la modification du fonctionnement comprend un arrêt de la lecture du contenu.

8. Entité de gestion (MNG) du téléchargement d'un contenu numérique (C1) au sein d'un terminal lecteur de contenus multimédias (CLTV), dans un réseau de communication, ledit terminal lecteur de contenus multimédias étant apte à être une source (HDMI1) de contenus d'un terminal de restitution (5), ledit terminal de restitution ayant plusieurs sources de contenu numérique (HDMI1,HDMI2) sélectionnables, un contenu ayant plusieurs débits d'encodage disponibles associés à des qualités de restitution respectives, **caractérisé en ce qu'**il comprend
un module de détection apte, au cours d'une lecture d'un premier contenu par le terminal lecteur, le terminal lecteur de contenus étant sélectionné par le terminal de restitution comme source de contenu numérique, dite première source, à détecter une sélection d'une source, dite deuxième source, autre que la première source,
un module de déclenchement apte à déclencher une durée d'attente au cours de laquelle la réception du premier contenu est poursuivie en maintenant une qualité optimale en fonction de la bande passante, la durée d'attente étant suivie d'une étape de modification du fonctionnement du terminal lecteur en liaison avec la lecture du premier contenu

9. Terminal lecteur de contenus multimédias (CLTV) comprenant une entité telle que définie dans la revendication 8.

## Patentansprüche

1. Verfahren zum Verwalten des Herunterladens eines digitalen Inhalts (C1) in ein Multimedia-Lesegerät (CLTV) aus einem Kommunikationsnetz, wobei das Multimedia-Lesegerät geeignet ist, eine Quelle (HDMI1) von Inhalten eines Wiedergabegeräts (5) zu sein, wobei das Wiedergabegerät mehrere auswählbare Quellen digitaler Inhalte (HDMI1, HDMI2) aufweist und ein Inhalt mehrere verfügbare Codierraten aufweist, die mit jeweiligen Wiedergabequalitäten assoziiert sind, wobei die gewählte Qualität bandbreitenabhängig ist, **dadurch gekennzeichnet, dass** es die folgenden Schritte umfasst, wenn das Inhaltslesegerät als Quelle eines digitalen Inhalts, erste Quelle genannt, ausgewählt wird,
einen Schritt des Erkennens einer Auswahl einer Quelle, zweite Quelle genannt, die eine andere als die erste Quelle ist, beim Lesen eines ersten Inhalts durch das Lesegerät,
einen Schritt des Lesens und des Wiedergebens eines zweiten Inhalts, der von der zweiten Quelle stammt, anstelle des ersten Inhalts,
wobei der Schritt des Erkennens eine Wartezeit auslöst, in deren Verlauf der Empfang des ersten Inhalts unter Aufrechterhaltung einer bandbreitenabhängigen optimalen Qualität verfolgt wird, wobei die Wartezeit von einem Schritt des Änderns des Betriebs des Lesegeräts in Zusammenhang mit dem Lesen des ersten Inhalts gefolgt wird.

2. Verfahren zum Verwalten nach Anspruch 1, **dadurch gekennzeichnet, dass** der Schritt des Änderns eine Anfrage zur Änderung der gängigen Qualität und zur Aufrechterhaltung der geänderten Qualität während einer gegebenen Dauer umfasst.

3. Verfahren zum Verwalten nach Anspruch 1, **dadurch gekennzeichnet, dass** das Ändern darin besteht, einen Bitratenwert über die gegebene Dauer aufzuerlegen.

4. Verfahren zum Verwalten nach Anspruch 2, **dadurch gekennzeichnet, dass** der auferlegte Bitratenwert unter den geringsten Bitraten ausgewählt wird.

5. Verfahren zum Verwalten nach Anspruch 1, **dadurch gekennzeichnet, dass** das Ändern darin besteht, den Bitratenwert stufenweise über eine gegebene Dauer zu verringern.

6. Verfahren zum Verwalten nach Anspruch 1, **dadurch gekennzeichnet, dass** nach einem Wechsel der Quelle, eine Dauer der Inaktivität des Benutzers bezüglich des Lesegeräts berechnet wird und dass der elektrische Zustand (VL) des Lesegeräts geändert wird, wenn die Dauer der Inaktivität erreicht ist.

7. Verfahren zum Verwalten nach Anspruch 1, **dadurch gekennzeichnet, dass** das Ändern des Betriebs ein Anhalten des Lesens des Inhalts umfasst.

8. Einheit zum Verwalten (MNG) des Herunterladens eines digitalen Inhalts (C1) in ein Multimedia-Lesegerät (CLTV) in einem Kommunikationsnetz, wobei das Multimedia-Lesegerät dazu geeignet ist, eine Quelle (HDMI1) von Inhalten eines Wiedergabegeräts (5) zu sein, wobei das Wiedergabegerät mehrere auswählbare Quellen digitaler Inhalte (HMDI1, HDMI2) aufweist und ein Inhalt mehrere verfügbare Codierraten aufweist, die mit jeweiligen Wiedergabequalitäten assoziiert sind, **dadurch gekennzeichnet, dass** sie umfasst:
ein Modul zum Erkennen, das fähig ist, beim Lesen eines ersten Inhalts durch das Lesegerät eine Auswahl einer Quelle, zweite Quelle genannt, die eine andere als die erste Quelle ist, zu erkennen, wobei das Inhaltslesegerät durch das Wiedergabegerät als Quelle des digitalen Inhalts, erste Quelle genannt, ausgewählt wird,
ein Modul zum Auslösen, das fähig ist, eine Wartezeit auszulösen, in deren Verlauf der Empfang des ersten Inhalts unter Aufrechterhaltung einer bandbreitenabhängigen optimalen Qualität verfolgt wird, wobei die Wartezeit von einem Schritt des Änderns des Betriebs des Lesegeräts in Zusammenhang mit dem Lesen des ersten Inhalts gefolgt wird.

9. Multimedia-Lesegerät (CLTV), das eine Einheit wie in Anspruch 8 definiert umfasst.

## Claims

1. Method for managing the downloading of a digital content item (C1) within a multimedia content reader terminal (CLTV), from a communication network, said multimedia content reader terminal being able to be a content source (HDMI1) of a rendering terminal (5), said rendering terminal having a plurality of selectable digital content sources (HDMI1, HDMI2), a content item having a plurality of available encoding bit rates associated with respective rendering qualities, the chosen quality depending on a bandwidth, **characterized in that** it comprises the following steps when the content reader terminal is selected as digital content source, called first source,
a step of detecting, during reading of a first content item by the reader terminal, selection of a source, called second source, other than the first source,
a step of reading and rendering a second content item originating from the second source instead of the first content item,
the detection step triggering a waiting period during which the first content item continues to be received while maintaining an optimum quality depending on the bandwidth, the waiting period being followed by a step of modifying the operation of the reader terminal in connection with the reading of the first content item.

2. Management method according to Claim 1, **characterized in that** the modification step comprises a request to modify the current quality and to maintain the modified quality for a given duration.

3. Management method according to Claim 1, **characterized in that** the modification consists in imposing a bit rate value over the given duration.

4. Management method according to Claim 2, **characterized in that** the imposed bit rate value is chosen from among the lowest bit rates.

5. Management method according to Claim 1, **characterized in that** the modification consists in incrementally reducing the bit rate value over a given duration.

6. Management method according to Claim 1, **characterized in that**, after a change of source, an inactivity duration of the user with respect to the reader terminal is calculated and **in that**, if the inactivity duration is reached, the electrical state (VL) of the reading terminal is modified.

7. Management method according to Claim 1, **characterized in that** modifying the operation comprises stopping the reading of the content item.

8. Management entity (MNG) for managing the downloading of a digital content item (C1) within a multimedia content reader terminal (CLTV), in a communication network, said multimedia content reader terminal being able to be a content source (HDMI1) of a rendering terminal (5), said rendering terminal having a plurality of selectable digital content sources (HDMI1, HDMI2), a content item having a plurality of available encoding bit rates associated with respective rendering qualities, **characterized in that** it comprises
a detection module able, during reading of a first content item by the reader terminal, the content reader terminal being selected by the rendering terminal as digital content source, called first source, to detect selection of a source, called second source, other than the first source,
a triggering module able to trigger a waiting period during which the first content item continues to be received while maintaining an optimum quality depending on the bandwidth, the waiting period being followed by a step of modifying the operation of the reader terminal in connection with the reading of the first content item.

9. Multimedia content reader terminal (CLTV) comprising an entity as defined in Claim 8.
